# EUROPEAN PATENT APPLICATION

(11) **EP 1 136 506 A1**
(43) Date of publication of application: **26.09.2001**
(21) Application number: 00201062.7
(22) Date of filing: 23.03.2000
(51) Int. Cl.: C08F 8/00

(54) **Compound comprising a supramolecular complex, method of preparation and use thereof, and process for preparing a glutar imide containing polymer**

(71) Applicant: DSM N.V., 6411 TE Heerlen (NL)
(72) Inventor: Loontjens, Jacobus Antonius, 6231 KK Meerssen (NL); Clauswitz, Kai Uwe, 63589 Linsengericht 2 (DE)
(74) Representative: den Hartog, Jeroen H.J.

(57) **Abstract**

The present invention relates to a compound comprising a supramolecular complex of a glutar imide containing polymer with an amino pyridine. The compound can be used in engineering plastic applications. The invention also relates to a process for the preparation of a glutar imide containing polymer having a low acid level wherein the process comprises an at least partial cyclisation step of a copolymer of (meth)acrylate and (meth)acrylamide or of a homopolymer of (meth)acrylamide in the presence of an acid.

## Description

The present invention relates to a compound comprising a supramolecular complex of a glutar imide containing polymer with an amino pyridine.

Glutar imide containing polymers are known, for instance from EP-A1-915105.

A drawback of the known glutar imide containing polymers is their insufficient height in Tg which is required for the use of these polymers in certain engineering applications. Therefore, there currently is a need for glutar imide containing polymers having an increased Tg.

The invention now provides a compound comprising a supramolecular complex comprising a glutar imide containing polymer, the compound having an increased Tg compared to the glutar imide containing polymer as such.

This is achieved according to the present invention by a compound comprising a supramolecular complex of a glutar imide containing polymer with an amino pyridine.

Supramolecular complexes or compounds, for instance polymers, are described in Macromolecules (1995,28,782-783) by Lange and Meijer. Said supramolecular complexes are derived from styrene-maleimide copolymers mixed with melamine. A disadvantage of the mixtures thus obtained is that they are very brittle and have inadequate mechanical properties.

In general, "supramolecular chemistry" is understood to be the chemistry of non-covalent, oriented, multiple (at least two), cooperative interactions. For instance, a "supramolecular polymer" is an organic compound that essentially obtains its properties, for instance with respect to its mechanical and rheological behaviour, through a combination of covalent bonds and specific secondary interactions with high physical bond strengths that contribute substantially to the properties of the resulting material.

The invention further relates to a method of preparing a compound comprising a supramolecular complex, said compound showing little bubble formation during processing and to the use of a compound comprising a supramolecular complex of a glutar imide containing polymer and an amino pyridine.

In a preferred embodiment of the compound comprising the supramolecular complex of the present invention a sufficient amount of imide groups in the glutar imide polymer and a sufficient amount of an amino pyridine are present to obtain a compound having an increased glass transition temperature (Tg) compared to the Tg of the glutar imide containing polymer without amino pyridine.

Preferably, the compound comprising a supramolecular complex of the present invention has a Tg of at least about 2°C higher than the Tg of the glutar imide containing polymer without amino pyridine, more preferably, a Tg of at least about 3°C higher, particularly preferred, at least about 4°C higher, most preferred at least about 5°C higher. Preferably, the Tg increase of the compound of the invention compared to the Tg of the glutar imide containing polymer as such is less than about 50°C, more preferably less than about 45°C, particularly preferred, less than about 40°C. If the Tg increase is more than about 50°C, the resulting complex may become too brittle.

The Tg of the glutar imide containing polymer as such is strongly dependent on the nature of the co-monomers of which the polymer is derived. The Tg of the glutar imide containing polymer as such can be between about 20°C and about 250°C. Preferably, the Tg of the glutar imide containing polymer as such is between about 50°C and about 240°C, more preferably, between about 70°C and about 220°C, particularly preferred between about 100°C and about 200°C.

A further advantage of the compound comprising the supramolecular complex of the invention compared to glutar imide containing polymers as such is its relatively high stiffness at the high temperatures of use and, in the meantime, its relatively low viscosity at the higher processing temperatures. In general, the temperature at which the compound is processed will be at about 170°C or higher. The compound of the invention shows, at a temperature of about 25°C above its Tg, a lower melt viscosity than the glutar imide containing polymer as such. This is extremely advantageous for achieving fast processing.

The invention also relates to a process for preparing a glutar imide containing polymer having a low acid level.

From EP-A1-915105 and US 4,727,117 it is known to prepare poly glutar imides, having an acid level of less than 1%, from polymethyl methacrylate using methyl amine as an imidization agent and subsequently using anhydrous dimethyl carbonate as a re-esterification agent to decrease the acid level of the poly glutar imide and consequently decrease the bubble formation.

Further, from EP-A2-216505 a process is known for preparing polyimides, having reduced acid and/or anhydride functionality, from poly(meth)acrylates using primary amines and acid and/or anhydride blocking agents.

The processes described in US 4,727,117 and in EP-A2-216505 are cumbersome. In addition to an imidisation step, an extra process step such as the addition of a re-esterification agent, alkylating agent or the like, is required to decrease the acid level. If the acid level of the glutar imide is high, bubble formation would occur during further processing.

The invention now provides an improved process for preparing poly glutar imides having a relatively low acid level.

This is achieved according to the invention by a process comprising an at least partial cyclisation step of a copolymer of (meth)acrylate and (meth)acrylamide or of a homopolymer of (meth)acrylamide in the presence of an acid. The acid can be a Lewis acid or Brönsted acid.

Suprisingly, the improved process of the present invention shows less acid formation, which in turn results in less bubble formation.

Further, a process is known from DE-C2-3246904 for the preparation of polyimides by imidisation of acryl acid and/or methacryl acid derivatives containing a majority of amide groups at a temperature between 150°C to 450°C and without adding ammonia or a primary amine. However, the use of relatively drastic process conditions, in particular high temperatures, results in side reactions and thus in bubble formation.

Throughout the description, the terms glutar imide containing polymer and poly glutar imide are used interchangeably.

The starting product(s) for the process of the present invention is (are) a copolymer of (meth)acrylate and (meth)acrylamide or a homopolymer of (meth)acrylamide. Preferably, a copolymer is used as the starting product. The copolymer can comprise between 1-90 mol % of the (meth)acrylamide. Preferably, the amount of the (meth)acrylamide is less than about 50 mol %, more preferably, less than about 40 mol %., particularly preferred less than about 30 mol % and most preferred, less than about 15 mol %. Preferably, the amount of the (meth)acrylamide is at least about 1 mol %, more preferably, at least about 5 mol %, particularly preferred, at least about 7 mol %, most preferred, at least about 9 mol %.

The ratio of ester to amide functionality can be between about 1:0.01 and about 1:1. Preferably, the ratio of ester to amide functionality is between about 1:0.05 and about 1:0.9, more preferred, between about 1:0.07 and about 1:0.7, particularly preferred, between about 1:0.1 and about 1:0.5.

The Tg of the glutar imide containing polymer strongly depends on the nature of the co-monomers used, in particular, the (meth)acrylate and (meth)acrylamide monomers. The terms (meth)acrylate and (meth)acrylamide include the acrylate, methacrylate, acrylamide and methacrylamide derivatives, also including, for example, alkyl derivatives thereof. Examples of suitable (meth)acrylate monomers are methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, lauryl acrylate, isobornyl acrylate, isodecyl (meth)acrylate, benzyl (meth) acrylate and hydroxyalkyl (meth)acrylates such as hydroxyethyl (meth)acrylate and hydroxypropyl (meth)acrylate and/or glycidyl esters or glycidyl ethers of alkyl (meth)acrylates, and the like, and mixtures thereof. Among this list, methyl (meth)acrylate, ethyl (meth)acrylate, propyl (meth)acrylate and butyl (meth)acrylate are preferred. Among the (meth)acrylamides, methacrylamide is preferred. When using the (meth)acrylate and (meth)acryl amide derivatives, the process of preparing the glutar imide containing polymer is more efficient and thus results in less bubble formation.

In general, the Tg of the glutar imide containing polymer lies between about 20°C and about 250°C. Preferably, the Tg of the glutar imide containing polymer is between about 50°C and about 240°C, more preferably, between about 70°C and about 220°C, particularly preferred between about 100°C and about 200°C.

The glutar imide containing polymer generally has a number average molecular weight of at least about 1,000, more preferably, at least about 5,000, particularly preferred, at least about 10,000, and most preferred, at least about 30,000. The polymer preferably has a number average molecular weight of about 300,000 or less, more preferably, about 250,000 or less, particularly preferred, about 220,000 or less, and most preferred, about 200,000 or less.

The acid level of the glutar imide containing polymer can be derived from the remaining non-imide groups being largely in the form of (meth)acrylic acid groups and their amine salts. The acid level can thus be defined as the level of (meth)acryl acid units or carboxylic acid groups present in the glutar imide polymer.

Preferably, the acid level of the glutar imide containing polymer prepared according to the process of the present invention is less than about 5 wt.%, more preferably, less than about 4 wt.%, and particularly preferred less than about 1 wt.%.

The acid used in the preparation of the glutar imide containing polymer of the invention can be a Lewis acid or Brönsted acid. Examples of suitable Brönsted acids are H₂SO₄, HNO₃, HX, H₃PO₄, H₃PO₃, RH₂PO₂, RH₂PO₃, R[(CO)OH]ₙ wherein n = 1-6, and the like. Examples of suitable Lewis acids are BX₃, MgX₂, BiX₃, SnX₄, SbX₅, FeX₃, GaX₃, HgX₂, ZnX₂, AlX₃, TiX₄, MnX₂, ZrX₄, R₄NX, R₄PX, HX, wherein X is I, Br, Cl, F, OR and R is alkyl or aryl, and the like. Also mixtures of acids can be used. Preferably, a Lewis acid is used. Among the Lewis acids, ZnCl₂ is preferred.

The acid used in the preparation of the glutar imide containing polymer of the invention preferably is present in an amount of at least about 0.05 wt.%, more preferably, at least about 0.1 wt.%, particularly preferred, at least about 0.5 wt.%, and most preferred, at least about 0.9 wt.%. Preferably, the acid is present in an amount of about 7 wt.% or less, more preferably, about 5 wt.% or less, particularly preferred, about 3 wt.% or less, and most preferred, about 2 wt.% or less.

In the process of the present invention for the preparation of the glutar imide polymer, the addition of an esterification agent, an alkylating agent or the like is not required to reduce the acid level of the final glutar imide containing polymer. However, small amounts of such agent can be present. Preferably, the amount of the agent present in the process for preparing the poly glutar imides of the present invention is less than about 5 wt.%, more preferably, less than about 4 wt.%, particularly preferred, less than about 1 wt.%. It is generally most economical to have substantially no agent present.

The process for preparing the glutar imide containing polymer of the present invention can be carried out in an autoclave, extruder or other reaction vessel. For example, the polyglutar imide can be prepared by heating at temperatures between about 175°C and about 250°C with stirring or mixing the selected copolymer or homopolymer (which are described above), preferably in an autoclave, at a pressure between about 1 atm (101.3 kPa) to about 1000 atm (101300 kPa). Preferably, the glutar imide containing polymer is prepared at atmospheric pressure.

The process of the present invention is preferably carried out at a temperature between about 150°C and about 400°C, more preferred, between about 150°C and about 350°C, particularly preferred, between about 200°C and about 250°C.

The process of the invention can be carried out in solvent or in bulk, preferably, substantially no solvent is present.

The reaction time for imidisation generally lies between about 1 and about 60 minutes, preferably, between about 2 and about 50 minutes, more preferably, between about 3 and about 45 minutes.

The compound comprising the supramolecular complex of the glutar imide containing polymer and an amino pyridine can be prepared in the same type of reaction vessels as described above. In practice, the process for preparing the glutar imide containing polymer and subsequently, the addition and mixing-in of the suitable amino pyridine can be performed in the same autoclave, extruder or other reaction vessel. Experiments can, for example, be performed in a Brabender kneading-machine (Plastic-corder PLE651) wherein the polymer and subsequently the compound comprising the supramolecular complex are prepared.

The temperature at which the amino pyridine is added to the glutar imide compound generally lies between about 125°C and about 300°C, preferably between about 150°C and 250°C.

The residence time of the polymer and amino pyridine in the reaction vessel generally is between about 1 and about 30 minutes, preferably between about 1,5 and about 20 minutes, more preferably between about 2 and about 5 minutes.

In a preferred embodiment of the present invention, the compound of the present invention comprises a supramolecular complex of a glutar imide containing polymer prepared by the above process, and an amino pyridine. When a glutar imide containing polymer is used that is prepared by the said process, the resulting compound shows less bubble formation.

Examples of suitable amino pyridines used in the compound comprising the supramolecular complex are melamine, amino pyridines such as 2,6-di-amino pyridine, substituted and dimeric amino pyridines, and the like, and mixtures thereof. Whenever the term amino pyridine is used, this term includes amino pyridines per se and derivatives thereof, such as substituted and dimeric amino pyridines. Preferably, melamine is used. Melamine shows a strong tendency for forming intermolecular interactions, resulting in the formation of strong reversible intermolecular physical interactions.

The amino pyridine is generally present in an amount of at least about 0.1 wt.%, more preferably, at least about 0.5 wt.%, particularly preferred, at least about 1 wt.%, and most preferred, at least about 2 wt.%. The amino pyridine is preferably present in an amount of about 20 wt.% or less, more preferably, about 15 wt.% or less, particularly preferred, about 10 wt.% or less, and most preferred, about 5 wt.% or less.

The amount of the amino pyridine used will depend on the amount of imide groups present in the glutar imide containing polymer. The higher the level of imide groups in the glutar imide containing polymer, the higher the amount of amino pyridine, preferably melamine, added. The amount of amino pyridine can be in excess to the amount of the polymer or vice versa. Preferably, the ratio between the imide group of the glutar imide containing polymer and the amino pyridine group is between about 10:1 to about 1:3, more preferred, between about 2:1 and about 1:1.2. Particularly preferred, the ratio of the polymer to pyridine is about 0.8 to about 1.2, and most preferred, about 1 to about 1.

A further advantage of the present process is that a basis grade of the glutar imide containing polymer can be prepared in an autoclave, extruder or other reaction vessel as described above. By adding different amounts of the amino pyridine to said basis grade, several different grades of the compound of the present invention can then be prepared by simply mixing.

Preferably, the amino pyridine compound comprises more than 1 complexing unit. If the amino pyridine comprises more than 1 complexing unit, the molar ratio is preferably chosen as such that only one complexing unit of the amino pyridine compound interacts with one imide-group of the glutar imide containing polymer.

The amino pyridine can be added to the glutar imide containing polymer in the melt or in a solution. Preferably, the amino pyridine is added in the melt.

The invention also relates to a method of preparing a compound comprising a supramolecular complex of a glutar imide containing polymer with an amino pyridine, said compound showing little bubble formation during processing. The method comprises the step of adding to the compound comprising a supramolecular complex of a glutar imide containing polymer with an amino pyridine an alkylating agent, an esterification agent, mixtures thereof or the like. These agents may be used to partially or completely remove residual acid functionality which may still be present in the compound comprising the supramolecular complex of the glutar imide containing polymer and the amino pyridine. This might in particular be the case when the glutar imide containing polymer that is used does not have a sufficiently low acid level because it is, for example, prepared according to another process than the process of the present invention. Suitable examples of alkylating agents are orthoesters, ketals, carbonates and/or sulfoxides, preferably, alkyl, aryl, alkaryl and/or aralkyl carbonate and/or dialkyl sulfoxide, and the like. Other agents, including esterification agents, may also be used such as siloxanes, silyl ethers, silylenol ethers, trialkyl phosphates, trialkyl phosphites, dialkyl sulfates, alkyl alkylsulfonates, alkyl arylsulfonates, dialkyl carbonates, diaryl carbonates, and the like.

The compound of the present invention can be used in forming plastic substrates for use in e.g electronic display applications, in automotive applications, and the like.

The compound may be formulated with additives to provide performance advantages and custom properties. Such additives include, for example, antioxidants, UV absorbers, UV stabilizers, fluorescent or absorbing dyes, anti-static additives, relaese agents, fillers and particulates. The type and amount of additive used for particular purposes are known to those skilled in the plastics art and will not be further elucidated in detail herein.

The compound used as an engineering plastic can be made by extrusion and injection molding techniques. Suitable applications for extrusion articles can be, for example, the housing of car lights. Suitable examples of injection molding articles can be, for example, panes of glass, glass panels and the like.

The invention will now be elucidated with reference to the folowing examples without however being limited thereby.

### Examples

### Example I

### Preparation of copolymers consisting of 10 mol % methacrylamide and 90 mol % butylmethacrylate

1.70 g methacrylamide (= 20 mmol), 25.6 g (= 180 mmol) butylmethacrylate, 0.25 AIBN and 50 ml DMF were added to a 250 ml glass flask equipped with a stirrer and a reflux condensor. The mixture was heated to 70°C for 24 hours. The polymer was precipitated by pouring the solution in 250 ml water. The polymer was filtered off and washed with 500 ml water. The polymer was dried at reduced pressure at 70°C overnight. The yield was 24.7 g (91 %).

### Example II

### Preparation of copolymers consisting of 50 mol % methacrylamide and 50 mol % butylmethacrylate

8.5 g methacrylamide (= 100 mmol), 14.2 g (= 100 mmol) butylmethacrylate, 0.25 AIBN and 50 ml DMF were added to a 250 ml glass flask equipped with a stirrer and a reflux condenser. The mixture was heated to 70°C for 24 hours. The polymer was precipitated by pouring the solution in 250 ml water. The polymer was filtered off and washed with 500 ml water. The polymer was dried at reduced pressure at 70°C overnight. The yield was 21.1 g (93 %).

### Example III

### The imidization of the copolymers

The imidization of the copolymer from the products of examples I and II into the glutarimide containing polymer was done by heating the sample. The imidisation was checked by IR spectroscopy. In the examples according to the invention ZnCl₂ is added as Lewis acid. Comparitive Experiments A and B are based on the copolymer of Example I but without addition of ZnCl₂. Comparitive Experiment C is based on the copolymer of Example II without adding ZnCl₂ (see Table 1).

**Table 1**

| Polymer | Ratio ester :amide | T (°C) | Time (min.) | ZnCl₂ (wt.%) | Product |
|---|---|---|---|---|---|
| Comp.Exp.A | 1:1 | 300 | 15 | none | Imidised** |
| Comp.Exp.B | 1:1 | 250 | 15 | none | not imidised |
| Ex. I.a. | 1:1 | 200 | 35 | 1 | Imidised* |
| Ex. I.b. | 1:1 | 220 | 35 | 2 | Imidised* |
| Ex. I.c. | 1:1 | 200 | 30 | 4 | Imidised* |
| Ex. II.a. | 9:1 | 250 | 45 | 1 | Imidised |
| Comp.Exp.C | 9:1 | 220 | 30 | none | not imidised |

| | | | | | |
|---|---|---|---|---|---|
| * These polymers did not show an absorption in the IR characteristic for acid groups. This indicates the absence of carboxylic acid groups. | | | | | |
| ** In Comparitive Experiment A imidisation was obtained only when using high temperatures and the IR spectrum still showed the presence of carboxylic groups. | | | | | |

### Example IV

### Preparation of copolymer consisting of 10 mol% methacrylamide and 90 mol% ethylmethacrylate

1.70 g methacrylamide (= 20 mmol), 20.5 g (= 180 mmol) ethylmethacrylate, 0.2 AIBN and 50 ml DMF were added to a 250 ml glass flask equipped with a stirrer and a reflux condensor. The mixture was heated to 70°C for 24 hours. The polymer was precipitated by pouring the solution in 250 ml water. The polymer was filtered off and washed with 500 ml water. The polymer was dried at reduced pressure at 70°C overnight. The yield was 20.1 g (90 %).

### Example V

### Preparation of copolymers consisting of 50 mol % methacrylamide and 50 mol % ethylmethacrylate

8.5 g methacrylamide (= 100 mmol), 11.4 g (= 100 mmol) ethylmethacrylate, 0.2 g AIBN and 50 ml DMF were added to a 250 ml glass flask equipped with a stirrer and a reflux condensor. The mixture was heated to 70°C for 24 hours. The polymer was precipitated by pouring the solution in 250 ml water. The polymer was filtered off and washed with 500 ml water. The polymer was dried at reduced pressure at 70°C overnight. The yield was 18.6 g (93 %).

### Example VI

### The imidization of the copolymers

The imidization if the copolymer from the product of examples IV and V into the glutarimide containing polymer was done by heating the sample. The imidisation was checked by IR spectroscopy. In the examples of the present invention ZnCl₂ is added as Lewis acid. Comparitive Experiments D and E are based on the copolymer of Example IV but without addition of ZnCl₂.

Comparitive Experiments F and G are based on the copolymer of Example V without adding ZnCl₂. Comparative Experiments E and G show that imidisation can be obtained in the absence of ZnCl₂ only when higher reaction temperatures are used (see Table 2).

**Table 2**

| Polymer | Ratio Ester: Amide | T (°C) | Time (min.) | ZnCl₂ (Wt.%) | Product |
|---|---|---|---|---|---|
| Comp.Exp. D | 9:1 | 200 | 15 | None | not imidised |
| Ex. IV.a. | 9:1 | 200 | 15 | 1 | Imidised* |
| Comp.Exp. E | 9:1 | 300 | 15 | none | Imidised |
| Comp.Exp. F | 1:1 | 200 | 15 | none | not |
| Ex. V | 1:1 | 200 | 15 | 1 | imidised |
| Comp.Exp. G | 1:1 | 300 | 15 | none | imidised* imidised |

| | | | | | |
|---|---|---|---|---|---|
| * These polymers did not show an absorption in the IR characteristic for acid groups. This indicates the absence of carboxylic acid groups. | | | | | |

### Example VII

### Blends with melamine

4 g polymer from example IV and 0.12 g melamine were processed at 200°C in a mini-extruder (DSM-Cordewener) with a residence time of 5 minutes. A blank, without melamine, was processed under the same conditions. The polymers were collected and pressed in thin films. The Dynamic Mechanical Thermal analysis (DMTA) were performed on a Rheometrics Solid Analyser 2 according to ASTM D5026 from -150 °C to 200°C. The Tg of the polymer without melamine was 137.5°C and with melamine 142.8°C.

## Claims

1. Compound comprising a supramolecular complex of a glutar imide containing polymer with an amino pyridine.

2. Compound according to claim 1 wherein the compound has a Tg of at least about 2°C higher than the glutar imide containing polymer without amino pyridine.

3. Compound according to any one of claims 1-2 wherein the Tg of the complex is at least 3°C higher than the glutar imide containing polymer without amino pyridine.

4. Compound according to any one of claims 1-3 wherein the glutar imide containing polymer has an acid level of less than about 1 wt.%.

5. Compound according to any one of claims 1-4 wherein the glutarimide containing polymer is prepared by an at least partial cyclisation of a copolymer of (meth)acrylate and (meth)acrylamide or of a homopolymer of (meth)acrylamide in the presence of an acid.

6. Compound according to claim 5 wherein the acid is a Lewis acid.

7. Compound according to claim 6 wherein the Lewis acid is ZnCl₂.

8. Compound according to any one of claims 1-7 wherein the amino pyridine is selected from the group consisting of melamine, 2,6-di-amino pyridine, substituted amino pyridine, dimeric amino pyridine, and mixtures thereof.

9. Compound according to claim 8 wherein the amino pyridine is melamine.

10. Method of preparing a compound comprising a supramolecular complex of a glutar imide containing polymer with an amino pyridine, said compound showing little bubble formation during processing, the method comprising the step of adding to the compound of any one of claims 1-9 an alkylating agent, an esterification agent or a mixture of both.

11. Use of the compound according to any one of claims 1-9 as an engineering plastic.

12. Use according to claim 11 wherein the engineering plastic is used in high temperature applications.

13. A process for the preparation of a glutar imide containing polymer having a low acid level wherein the process comprises an at least partial cyclisation step of a copolymer of (meth)acrylate and (meth)acrylamide or of a homopolymer of (meth)acrylamide in the presence of an acid.

14. Process according to claim 13 wherein the acid is a Lewis acid.

15. Process according to claim 14 wherein the Lewis acid is chosen from the group existing of BX₃, MgX₂, BiX₃, SnX₄, SbX₅, FeX₃, GaX₃, HgX₂, ZnX₂, AlX₃, TiX₄, MnX₂, ZrX₄, R₄NX, R₄PX, HX, or mixtures thereof and wherein X is I, Br, Cl, F, OR and R is alkyl or aryl.

16. Process according to claim 15 wherein the Lewis acid is ZnCl₂.

17. Process according to any one of claims 13-16 wherein the acid is present in an amount of between about 0.05 and about 5.0 wt.%.

18. Process according to any one of claims 13-17 wherein the Lewis acid is present in an amount between about 0.1 and about 3.0 wt.%.

19. Process according to any one of claims 13-18 wherein the process is carried out at a temperature between about 150°C and about 400°C.

20. Process according to claim 19 wherein the process is carried out at a temperature between about 150°C and about 300°C.
